Europäisches Patentamt

European Patent Office

Office européen des brevets

(11) Veröffentlichungsnummer: **0 244 785 B1**

# EUROPÄISCHE PATENTSCHRIFT

(45) Veröffentlichungstag der Patentschrift: **26.02.92**

(51) Int. Cl.⁵: **B60N 2/32**

(21) Anmeldenummer: **87106350.9**

(22) Anmeldetag: **02.05.87**

(54) **Rückenlehne für Fahrzeugsitze, insbesondere für Hintersitze von Kraftfahrzeugen.**

(30) Priorität: **06.05.86 DE 3615262**

(43) Veröffentlichungstag der Anmeldung:
**11.11.87 Patentblatt 87/46**

(45) Bekanntmachung des Hinweises auf die
Patenterteilung:
**26.02.92 Patentblatt 92/09**

(84) Benannte Vertragsstaaten:
**DE FR GB IT SE**

(56) Entgegenhaltungen:
**CH-A- 438 052**
**DE-A- 2 755 326**
**DE-A- 3 322 511**
**FR-A- 2 278 537**

(73) Patentinhaber: **Adam Opel Aktiengesellschaft**
**Bahnhofsplatz 1 Postfach 1560**
**W-6090 Rüsselsheim(DE)**

(72) Erfinder: **Trutter, Walter**
**Irenenstrasse 21**
**W-6200 Wiesbaden(DE)**
Erfinder: **Stenz, Karl, Dipl.-Ing.**
**Am Langelsweinberg 4**
**W-6200 Wiesbaden(DE)**

(74) Vertreter: **Bergerin, Ralf, Dipl.-Ing. et al**
**Adam Opel Aktiengesellschaft Bahnhofs-**
**platz 1 Postfach 17 10**
**W-6090 Rüsselsheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf eine Rückenlehne für Fahrzeugsitze, insbesondere für die Hintersitze von Kraftfahrzeugen, mit einer nach vorn herausklappbaren Mittelarmlehne und mit einem hinter der Mittelarmlehne angeordneten, karosserieseitig verriegelbaren Rückenlehnen-Tragteil, welches - zwecks Schaffung einer Ladeluke im Bereich der Mittelarmlehne - nach Lösen der karosserieseitigen Verriegelung ebenfalls nach vorn herausklappbar ist.

Es ist bekannt (vgl. beispielsweise die DE-OS 33 22 511), die Ausnehmung für eine an der Hintersitz-Rückenlehne eines Kraftfahrzeugsitzes schwenkbar angeordnete und in die Rückenlehne versenkbare Mittelarmlehne als Ladeluke auszubilden, die durch eine vom Kofferraum des Kraftfahrzeuges her zugängliche Klappe verschlossen wird. Die Klappe ist zugleich als Rückenlehnen-Tragteil ausgebildet. Bei offenem Rückenlehnen-Tragteil und herausgeschwenkter Mittelarmlehne lassen sich durch die hierdurch in der Rückenlehne frei werdende Öffnung sperrige Gegenstande, z.B. Skier, lange Holzleisten, Latten und dergleichen mehr hindurchschieben, so daß der Fahrgastraum gleichsam eine Verlängerung des Kofferraumes bildet.

Allgemein bekannt ist es des weiteren, die Hintersitz-Rückenlehne nach vorn umzuklappen, um auch hierdurch eine Vergrößerung des Laderaumes zu erreichen. Derartige verschwenkbare Rückenlehnen müssen natürlich in ihrer zurückgeklappten Normalstellung karosserieseitig verriegelbar sein, um ein unbeabsichtigtes selbsttätiges Nach-vorn-Verschwenken auszuschließen. Da das Rückenlehnen-Tragteil in seinem Mittelbereich, nämlich durch die herausklappbare Mittelarmlehne, besonders gut von vorn zugänglich ist, ist es bekannt, dort die Rückenlehnen-Verriegelung anzubringen. Diese wird beim bekannten Stand der Technik durch aufwendige Hinterrücken-Schlösser bewerkstelligt, die in ihrem Aufbau kompliziert und kostspielig sind.

Aufgabe der vorliegenden Erfindung ist es, eine wirksame und funktionssichere, lösbare Rükkenlehnenverriegelung mit einfachen Mitteln zu schaffen. Gemäß der Erfindung wird die Aufgabe bei einer Rückenlehne der eingangs bezeichneten Art dadurch gelöst, daß zur Verriegelung des Rückenlehnen-Tragteils ein Zapfenteil dient, an dem seitlich Gegenlager angeordnet sind und das hinter dem Rückenlehnen-Tragteil karosserieseitig unlösbar festgelegt ist, und daß das die Gegenlager aufweisende freie Ende des Zapfenteils in zurückgeklapptem Zustand des Rückenlehnen-Tragteils eine Ausnehmung im Rückenlehnen-Tragteil durchdringt und daß auf das Zapfenteil von der Vorderseite des Rückenlehnen-Tragteils her ein Drehknopf aufsetzbar ist, der ein Hülsenteil mit einer zentralen Ausnehmung aufweist, an deren Innenwandung seitliche Rasten angeordnet sind, die bei Betätigung des Drehknopfes nach Art eines Bajonettverschlusses mit den Gegenlagern des Zapfenteils zusammenwirken.

Die erfindungsgemäße Verriegelung zeichnet sich durch geringe Kosten, eine leichte und einfache Montage sowie durch eine einfache und sichere Funktion aus. Ein besonderer Vorteil besteht darin, daß sich durch die erfindungsgemäße Verriegelung große Fertigungstoleranzen von ± 3 mm, hervorgerufen durch den Einbau des Rückenlehnen-Tragteils und Schweißungenauigkeiten an der Karosserie, ohne Probleme ausgleichen lassen. Auch in optischer Hinsicht weist die erfindungsgemäße Verriegelung Vorteile auf.

In vorteilhafter Ausgestaltung des Grundgedankens der Erfindung wird vorgeschlagen, seitlich am Zapfenteil an diametral gegenüberliegenden Stellen desselben zwei als Nocken ausgebildete Gegenlager und an der Innenwandung des Drehknopfes - ebenfalls diametral gegenüberliegend - zwei gleichermaßen als Nocken ausgebildete Rasten anzuordnen, welche letzteren im Verriegelungszustand von den nockenförmigen Gegenlagern des Zapfenteils hintergriffen werden. Zweckmäßigerweise sind hierbei die nockenförmigen Gegenlager des Zapfenteils in Richtung auf den Drehknopf und die nockenförmigen Rasten des Drehknopfes in Richtung auf das Zapfenteil jeweils pfeilförmig zugespitzt ausgebildet. Durch diese gegenseitigen Anlaufspitzen an Zapfenteil und Drehknopf wird die Positionierung des Drehknopfes in Verriegelungsstellung erleichtert, so daß sich die Handhabung der erfindungsgemäßen Verriegelung sehr einfach gestaltet.

Eine besonders einfache und kostensparende Herstellung der erfindungsgemäßen Verriegelung läßt sich in vorteilhafter Weiterbildung der Erfindung dadurch realisieren, daß das Zapfenteil und der Drehknopf als Kunststoff-Spritzteile ausgebildet und die Gegenlager und Rasten und ggf. weitere Elemente des Zapfenteils und des Drehknopfes jeweils einstückig angeformt sind.

Weitere Einzelheiten und Vorteile der Erfindung können den Unteransprüchen sowie - anhand eines Ausführungsbeispiels der Zeichnung und der nachstehenden Beschreibung dieses Ausführungsbeispiels entnommen werden. Es zeigt:

Fig. 1 - in perspektivischer Explosionsdarstellung - einen Hintersitz für Kraftfahrzeuge,

Fig. 2 - in perspektivischer Darstellung entsprechend Fig. 1 - eine Kraftfahrzeug-Karosserie, im Bereich des (weggelassenen) Hintersitzes, und

Fig. 3     eine Hintersitz-Rückenlehnenverriegelung entsprechend Fig. 1 und 2, im teilweisen vertikalen Längsschnitt und in gegenüber Fig. 1 und 2 stark vergrößerter Darstellung.

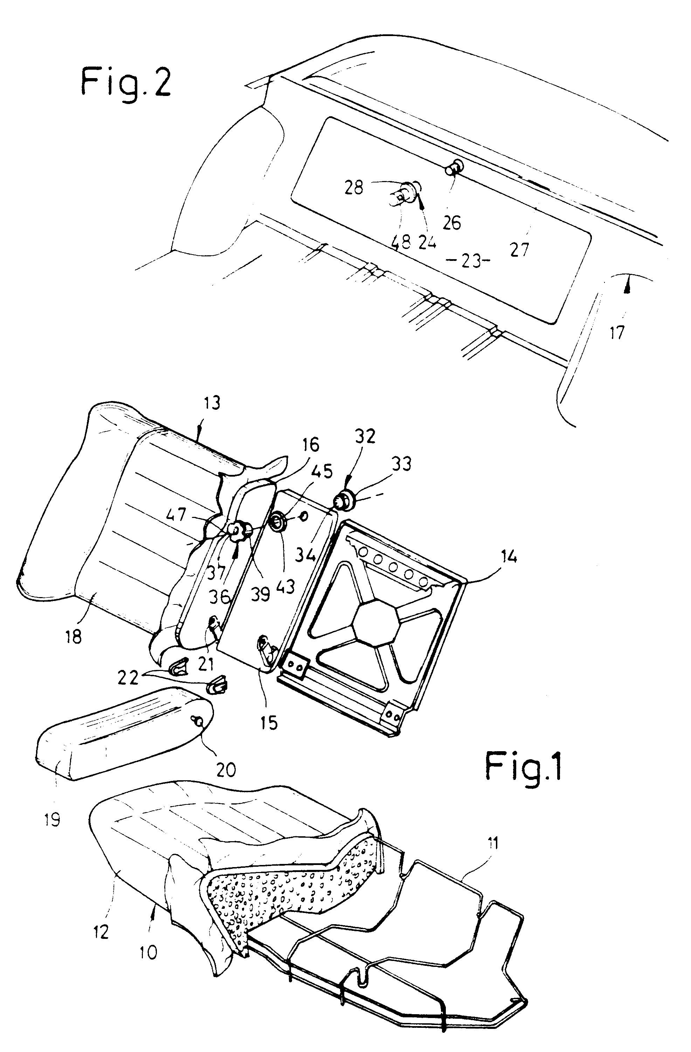

In Fig. 1 bezeichnet 10 das Sitzteil eines Kraftfahrzeug-Hintersitzes, welches aus einem Sitzrahmen 11 und einem darauf angeordneten (teilweise aufgeschnitten dargestellten) Sitzpolster 12 besteht. Mit 13 ist insgesamt die Rückenlehne des Fahrzeugsitzes 10 bezeichnet. Sie weist drei tragende Blechteile 14, 15 und 16 auf, die - einzeln oder gemeinsam nach vorn verschwenkbar - an der Karosserie 17 (Fig. 2) befestigt sind. Auf den beiden äußeren Blechteilen 14 und 16 ist jeweils ein Rückenlehnenpolster angeordnet, von denen in Fig. 1 eines gezeigt und mit 18 beziffert ist. Es handelt sich also um eine Hintersitz-Rückenlehne mit einzeln nach vorn verschwenkbaren Rückenlehnenteilen. In Fig. 1 ist die Rückenlehne 13 allerdings in zurückgeklappter Stellung gezeigt.

Wie weiterhin aus Fig. 1 hervorgeht, ist im Bereich des mittleren Rückenlehnen-Tragteils 15 eine Mittelarmlehne 19 schwenkbar und herausnehmbar angeordnet. Hierzu dienen Scharnierteile 20, 21 und 22. Die Schwenkachse der Mittelarmlehne 19 liegt bei 20. In zurückgeklappter Stellung ist die Mittelarmlehne 19 in einer zwischen den Rückenlehnenpolstern freigelassenen Vertiefung versenkt. Hierbei liegt sie an dem Rückenlehnen-Tragteil 15 an.

Wie schon oben angedeutet, kann das mittlere Rückenlehnen-Tragteil 15 (ebenso wie auch die beiden anderen Blechteile 14 und 16 der Rückenlehne 13) einzeln nach vorn geklappt werden. Bei herausgenommener Mittelarmlehne 19 und nach vorn geklapptem Rückenlehnen-Tragteil 15 ergibt sich somit zwischen den beiden Rückenlehnenpolstern 18 eine zum Kofferraum 23 (Fig. 2) hin offene Verbindung, die als Ladeluke für sperrige Gegenstände verwendet werden kann. In Normalstellung, d.h. in zurückgeklappter Position, ist jedoch das Rückenlehnen-Tragteil 15, wie bereits oben erwähnt, karosserieseitig verriegelt, damit beim Betrieb des Fahrzeuges kein unbeabsichtigtes selbsttätiges Nach-vorn-Verschwenken des Rückenlehnen-Tragteils 15 bzw. der Armlehne 19 erfolgen kann.

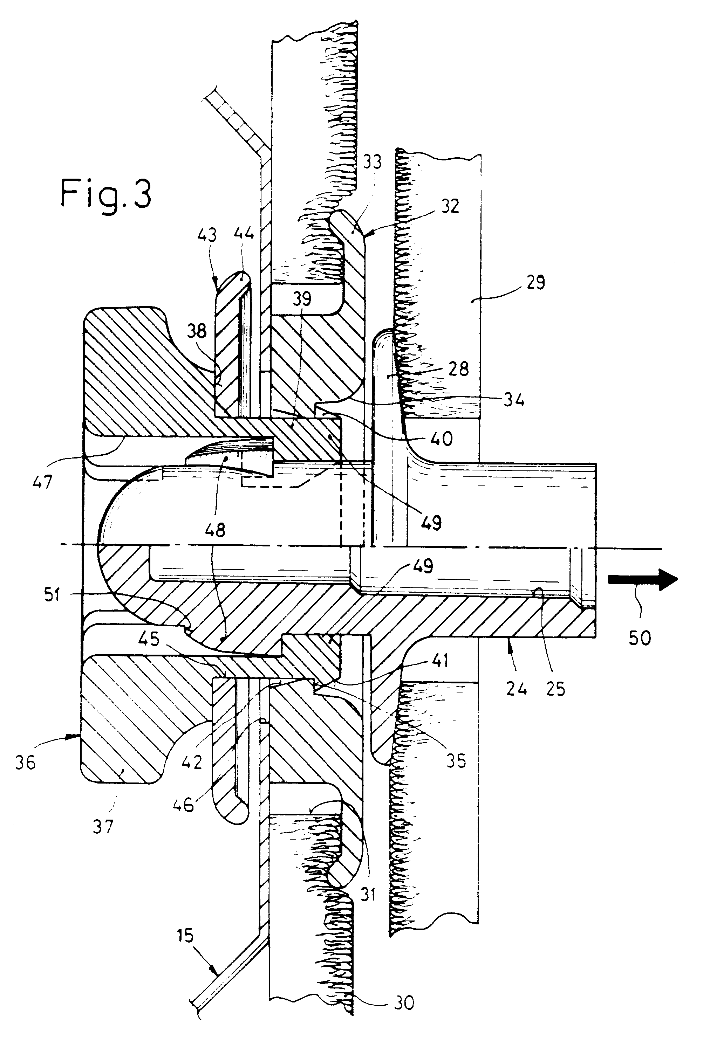

Die Ausbildung, Anordnung und Funktionsweise der Verriegelung für das Rückenlehnen-Tragteil 15 ist nun insbesondere aus Fig. 3 ersichtlich. Die Verriegelung weist zunächst ein Zapfenteil 24 auf, welches hülsenartig ausgebildet ist und dementsprechend eine innere axiale Ausnehmung 25 besitzt. Die Ausnehmung 25 des Zapfenteils 24 wirkt mit einem metallischen Haltebolzen 26 zusammen (Fig. 2), der - wie Fig. 2 zeigt - mit dem Metallrahmen 27 der Hutablage verschweißt ist. Der metallische Haltebolzen 26 besitzt in bekannter und daher nicht näher gezeigter Weise ein Gewinde und - an seinem freien Ende - eine Rändelung. Wird nun das Zapfenteil 24 auf den metallischen Haltebolzen 26 aufgedrückt, so erfolgt aufgrund der geschilderten Maßnahmen eine unlösbare Fixierung des Zapfenteils 24 auf dem Haltebolzen 26, und zwar sowohl in Axial- wie auch in Drehrichtung. In der Darstellung nach Fig. 3 ist der in die Ausnehmung 25 des Zapfenteils 24 eingreifende metallische Haltebolzen 26 weggelassen. Wie weiterhin aus Fig. 2, insbesondere aber auch aus Fig. 3 hervorgeht, besitzt das Zapfenteil 24 einen flanschartigen Bund 28, mit dem es in auf dem Haltebolzen 26 montierter Stellung an einem Teppichbezug 29 der Hutablage 27 zur Anlage kommt.

Fig. 3 läßt des weiteren erkennen, daß das Rückenlehnen-Tragteil 15 an seiner Rückseite mit einem Textilmaterial 30 bezogen ist, welches eine kreisförmige Ausnehmung 31 aufweist. In die Ausnehmung 31 ist ein Sicherungsring 32 eingesetzt. Der Sicherungsring 32 besitzt einen tellerartig nach vorn abgebogenen Rand 33, mit dem er sich an dem Textilbezug 30 des Rückenlehnen-Tragteils 15 abstützt. Außerdem weist der Sicherungsring 32 eine konzentrisch zur Ausnehmung 31 liegende Ausnehmung 34 mit einem innen angeformten umlaufenden Bund 35 auf. Der Sicherungsring 32 bzw. dessen zentrale Ausnehmung 34 und der Bund 35 wirken mit einem insgesamt mit 36 bezeichneten Drehknopf in aus Fig. 3 ersichtlicher Weise zusammen. Der Drehknopf 36 besteht im einzelnen aus einem manuell betätigbaren Griffelement 37, welches bei 38 einen Absatz bildet, und einem Hülsenteil 39, das in nachstehend beschriebener Weise mit dem Sicherungsring 32 kooperiert bzw. verbunden ist. Hierzu sind am vorderen freien Ende des Hülsenteils 39, an dessen Umfang, mehrere Rasten 40 angeformt, die in der aus Fig. 3 ersichtlichen Montagestellung den Bund 35 des Sicherungsringes 32 hintergreifen. Der Drehknopf 36 bleibt hierdurch zwar in Drehrichtung beweglich, ist jedoch in Axialrichtung gegenüber dem Sicherungsring 32 und damit auch gegenüber dem Rückenlehnen-Tragteil 15 unverschiebbar und unlösbar festgelegt. Um den Drehknopf 36 in die aus Fig. 3 ersichtliche Montagestellung bringen zu können, besitzen die Rasten 40 Anlaufschrägen 41, die mit einer entsprechenden Anfasung 42 am Sicherungsring 32 zusammenwirken.

Die in Fig. 3 gezeigte Montagestellung des Drehknopfes 36 wird des weiteren bestimmt durch einen Gleitring 43, der - ähnlich wie der Sicherungsring 32 - einen in Richtung auf das Rückenlehnen-Tragteil 15 tellerartig abgebogenen Rand 44 besitzt. Der Gleitring 43 weist ferner eine zentrale Ausnehmung 45 auf, die von dem Hülsenteil 39 des Drehknopfes 36 durchsetzt wird. Zugleich durchgreift hierbei das Hülsenteil 39 des Drehknopfes 36 auch eine kreisförmige Ausnehmung 46 im Rückenlehnen-Tragteil 15.

Die besondere Aufgabe des Drehknopfes 36 besteht aber nicht nur in dem im vorstehenden beschriebenen Zusammenwirken mit den Teilen 32 und 33. Vielmehr dient der Drehknopf 36 in erster Linie als Verriegelungsgegenstück zu dem bereits erwähnten und beschriebenen Zapfenteil 24. Wie Fig. 3 deutlich macht, ragt das Zapfenteil 24 mit seinem vorderen freien Ende in eine durchgehende zylindrische Ausnehmung 47 des Drehknopfes 36 hinein. Diese Position kennzeichnet die Verriegelungsstellung zwischen Zapfenteil 24 und Drehknopf 36. Zu diesem Zweck sind an das Zapfenteil seitlich an zwei diametral gegenüberliegenden Stellen zwei nockenförmig ausgebildete Gegenlager 48 einstückig angeformt. An der Innenwandung des Drehknopfes 36 innerhalb der Ausnehmung 47 desselben sind - ebenfalls an diametral gegenüberliegenden Punkten zwei Rasten 49 einstückig angeformt, die mit den Gegenlagern 48 des Zapfenteils 24 kooperieren. Die ebenfalls nockenförmig ausgebildeten Rasten 49 hintergreifen in der aus Fig. 3 ersichtlichen Verriegelungsstellung die nockenförmigen Gegenlager 48 des Zapfenteils 24, so daß das Zapfenteil 24 in Axialrichtung (Pfeil 50) nicht mehr aus dem Drehknopf 36 herausbewegt werden kann. Umgekehrt bedeutet dies, da ja der Drehknopf 36 - wie oben beschrieben - mit dem Rückenlehnen-Tragteil 15 verbunden ist, daß das Rückenlehnen-Tragteil 15 in seiner zurückgeschwenkten Stellung gegenüber der Fahrzeugkarosserie verriegelt ist.

Um die Verriegelung zu lösen, ist lediglich ein Verdrehen des Drehknopfes 36 um einen Winkel von ca. 90° erforderlich, bis die nockenförmigen Gegenlager 48 mit den ebenfalls nockenförmigen Rasten 49 außer Eingriff gelangen. Anschließend läßt sich das Rückenlehnen-Tragteil 15 nach vorn verschwenken. Die Wiederherstellung der Verriegelung erfolgt in umgekehrter Reihenfolge. D.h., der Drehknopf 36 muß zunächst in eine Position gedreht werden, daß die nockenförmigen Rasten 49 an den nockenförmigen Gegenlagern 48 des Zapfenteils 24 vorbeibewegt werden können. Dies wird dadurch begünstigt, daß die nockenförmigen Gegenlager 48 des Zapfenteils 24 in Richtung auf den Drehknopf 36 und die nockenförmigen Rasten 49 des Drehknopfes 36 in Richtung auf das Zapfenteil 24 jeweils pfeilförmig zugespitzt ausgebildet sind. Die entsprechend pfeilförmige Ausbildung der Gegenlager 48 ist insbesondere aus Fig. 2 erkennbar. Nach Erreichen der axialen Endstellung, die durch einen Anschlag 51 innerhalb der Ausnehmung 47 des Drehknopfes 36 bestimmt wird, muß der Drehknopf 36 gedreht werden bis seine nockenförmigen Rasten 49 die nockenförmigen Gegenlager 48 des Zapfenteils 24 - wie aus Fig. 3 ersichtlich - hintergreifen.

Abschließend ist noch zu erwähnen, daß die beschriebenen Teile der Verriegelung, als da sind Zapfenteil 24, Drehknopf 36, Sicherungsring 32 und Gleitring 43, einschließlich aller einstückig angeformten Funktionselemente, als Kunststoff-Spritzteile ausgebildet sind und zweckmäßigerweise alle aus demselben Kunststoffmaterial bestehen. Hierdurch läßt sich eine einfache und kostensparende Herstellung der in Rede stehenden Verriegelungselemente ohne anschließende Nacharbeit realisieren.

**Patentansprüche**

1. Rückenlehne (13) für Fahrzeugsitze (10), insbesondere für die Hintersitze von Kraftfahrzeugen, mit einer nach vorn herausklappbaren Mittelarmlehne (19) und mit einem hinter der Mittelarmlehne angeordneten, karosserieseitig verriegelbaren Rückenlehnen-Tragteil (15), welches - zwecks Schaffung einer Ladeluke im Bereich der Mittelarmlehne - nach Lösen der karosserieseitigen Verriegelung ebenfalls nach vorn herausklappbar ist,
dadurch gekennzeichnet, daß zur Verriegelung des Rückenlehnen-Tragteils (15) ein Zapfenteil (24) dient, an dem seitlich Gegenlager (48) angeordnet sind und das hinter dem Rückenlehnen-Tragteil (15) karosserieseitig (bei 26, 27) unlösbar festgelegt ist, und daß das die Gegenlager (48) aufweisende freie Ende des Zapfenteils (24) in zurückgeklapptem Zustand des Rückenlehnen-Tragteils (15) eine Ausnehmung (31, 46) im Rückenlehnen-Tragteil (15) durchdringt und daß auf das Zapfenteil (24) von der Vorderseite des Rückenlehnen-Tragteils (15) her ein Drehknopf (36) aufsetzbar ist, der ein Hülsenteil (39) mit einer zentralen Ausnehmung (47) aufweist, an deren Innenwandung seitlich Rasten (49) angeordnet sind, die bei Betätigung des Drehknopfes (36) nach Art eines Bajonettverschlusses mit den Gegenlagern (48) des Zapfenteils (24) zusammenwirken.

2. Rückenlehne nach Anspruch 1,
dadurch gekennzeichnet, daß seitlich am Zapfenteil (24) an diametral gegenüberliegenden Stellen desselben zwei als Nocken ausgebildete Gegenlager (48) und an der Innenwandung (47) des Drehknopfes (36) - ebenfalls diametral gegenüberliegend - zwei gleichermaßen als Nocken ausgebildete Rasten (49) angeordnet sind, die im Verriegelungszustand von den nockenförmigen Gegenlagern (48) des Zapfenteils (24) hintergriffen werden.

3. Rückenlehne nach Anspruch 1 oder 2, dadurch gekennzeichnet, daß die nockenförmigen Gegenlager (48) des Zapfenteils (24) in Richtung auf den Drehknopf (36) und die nockenförmigen Rasten (49) des Drehknopfes (36) in Richtung auf das Zapfenteil (24) jeweils pfeilförmig zugespitzt ausgebildet sind.

4. Rückenlehne nach Anspruch 1, 2 oder 3, dadurch gekennzeichnet, daß an dem von den Rasten (49) abgewandten Ende der Drehknopf-Innenwandung (47) Anschläge (51) zur axialen Festlegung der Verriegelungsstellung von Zapfenteil (24) und Drehknopf (36) angeordnet sind.

5. Rückenlehne nach einem oder mehreren der vorstehenden Ansprüche, dadurch gekennzeichnet, daß das Zapfenteil (24) und der Drehknopf (36) als Kunststoff-Spritzteile ausgebildet und die Gegenlager (48) und Rasten (49) und ggf. weitere Elemente des Zapfenteils und des Drehknopfes jeweils einstückig angeformt sind.

6. Rückenlehne nach einem oder mehreren der vorstehenden Ansprüche, dadurch gekennzeichnet, daß in einer Ausnehmung (31) des Rückenlehnen-Tragteils (15, 30) ein sich mit seinem flanschartigen Rand (33) an der Rückseite des Rückenlehnen-Tragteils abstützender Sicherungsring (32) mit einer zur Ausnehmung (31, 46) des Rückenlehnen-Tragteils (15) konzentrischen Ausnehmung (34) angeordnet ist, die von der Vorderseite her vom Hülsenteil (39) des Drehknopfes (36) und - im Verriegelungszustand - von der Rückseite her vom Zapfenteil (24) durchsetzt wird (Fig. 3).

7. Rückenlehne nach Anspruch 6, dadurch gekennzeichnet, daß das Hülsenteil (39) des Drehknopfes (36) mit dem Sicherungsring (32) in Drehrichtung beweglich, in Axialrichtung jedoch unverschiebbar und unlösbar verrastbar ist.

8. Rückenlehne nach Anspruch 6 oder 7, dadurch gekennzeichnet, daß der Sicherungsring (32) als Kunststoff-Spritzteil ausgebildet ist und innerhalb seiner Ausnehmung (34) - als Gegenrast zur axialen Festlegung des Drehknopfes (36) - einen einstückig angeformten Bund (35) aufweist, und daß am freien Ende des Drehknopf-Hülsenteils (39) mehrere, Anlaufschrägen (41) besitzende, nockenförmige Rasten (40) einstückig angeformt sind, die in Montagestellung des Drehknopfes (36) den Bund (35) hintergreifen.

9. Rückenlehne nach einem oder mehreren der vorstehenden Ansprüche, dadurch gekennzeichnet, daß zwischen Drehknopf (36) und Rückenlehnen-Tragteil (15) ein vom Hülsenteil (39) des Drehknopfes (36) durchsetzter Gleitring (43) angeordnet ist, an dem sich das Griffelement (37) des Drehknopfes (36) mit einem Absatz (38) abstützt.

10. Rückenlehne nach Anspruch 9, dadurch gekennzeichnet, daß der Gleitring (43) ebenfalls als Kunststoff-Spritzteil ausgebildet ist und daß Zapfenteil (24), Drehknopf (36), Sicherungsring (32) und Gleitring (43), einschließlich aller einstückig angeformten Funktionselemente, aus demselben Material bestehen.

11. Rückenlehne nach einem oder mehreren der Ansprüche 6-10, dadurch gekennzeichnet, daß die Ränder (33 bzw. 44) des Sicherungsringes (32) einerseits und des Gleitringes (43) andererseits jeweils in Richtung auf das Rückenlehnen-Tragteil (15) tellerartig abgebogen ausgebildet sind.

12. Rückenlehne nach einem oder mehreren der vorstehenden Ansprüche, dadurch gekennzeichnet, daß das Zapfenteil (24) hülsenartig ausgebildet ist und auf einen karosserieseitig befestigten, vorzugsweise angeschweißten, metallischen Haltebolzen (26) unlösbar aufsteckbar ist (Fig. 2).

13. Rückenlehne nach Anspruch 12, dadurch gekennzeichnet, daß der metallische Haltebolzen (26) - zur axialen Fixierung des aufgesteckten Zapfenteils (24) -ein Gewinde und - zur drehfesten Fixierung des aufgesteckten Zapfenteils (24) - an seinem freien Ende eine Rändelung aufweist.

14. Rückenlehne nach einem oder mehreren der vorstehenden Ansprüche, dadurch gekennzeichnet, daß das Zapfenteil (24) mit seinem rückwärtigen Ende eine Ausnehmung in der Hutablage (27, 29) durchsetzt und sich mit einem einstückig angeformten flanschartigen Bund (28) an der Vorderseite der Hutablage abstützt.

**Claims**

1. Back rest (13) for vehicle seats (10), especially for the rear seats of motor vehicles, with a centre arm rest (19) which can be folded out towards the front and a back rest support part (15), which can be locked in place on the body side, is arranged behind the centre arm rest (19) and the back rest support part (15) - for providing a loading space in the area of the centre arm rest - after releasing the locking device on the body side can also be folded out to the front,

characterised in that for locking the back rest support part (15) there is provided a spigot part (24), which has lateral abutments (48), and which is non-releasably fixed to the side of the body (at 26, 27) behind the back rest support part (15), and that the free end of the spigot part (24) containing the abutment (48) penetrates a recess (31, 46) in the back rest support part (15) when the back rest support part (15) is folded back, and that a rotary knob (36) can be applied to the spigot part (24) from the direction of the front side of the back rest support part (15), the rotary knob (36) having a sleeve part (39) with a central recess (47) to the inner wall of which notches (49) are arranged laterally which on operating the rotary knob (36) cooperate with the abutments (48) of the spigot part (24) in the manner of a bayonet catch (24).

2. Back rest according to claim 1,
characterised in that two abutments (48) in the form of cams are arranged laterally on the spigot part (24) at diametrically opposite points and that two notches (49) also in the form of cams are arranged on the inner wall (47) of the rotary knob (36) - also diametrically opposite each other -, which in the locking position are engaged from behind by the cam-like abutments (48) of the spigot part (24).

3. Back rest according to claim 1 or 2,
characterised in that the cam-like abutments (48) of the spigot part (24) each have arrow-shaped points in the direction towards the rotary knob (36) and the cam-shaped notches (49) of the rotary knob (36) each have arrow-shaped points in the direction towards the spigot part (24).

4. Back rest according to claim 1, 2 or 3,
characterised in that the end of the rotary knob inner wall (47) facing away from the notches (49) is provided with stops (51) for axially localising the locking position of spigot part (24) and rotary knob (36) .

5. Back rest according to one or more of the preceding claims,
characterised in that the spigot part (24) and the rotary knob (36) are in the form of plastics injection moulding parts and the abutments (48) and notches (49) and if necessary further elements of the spigot part and the rotary knob are each formed of one piece.

6. Back rest according to one or more of the preceding claims,
characterised in that in a recess (31) of the back rest support part (15, 30) is arranged a locking ring (32) with its flange-like rim (33) supported on the rear side of the back rest support part with a recess (34) concentric with a recess (31, 46) of the back rest support part (15) which is interspersed by the sleeve part (39) from the front side and - in the locking position - by the spigot part (24) from the rear side (Fig. 3).

7. Back rest according to claim 6,
characterised in that the sleeve part (39) of the rotary knob (36) can be locked with the locking ring (32) for movement in the rotary direction, but in the axial direction it is non-displaceably and non-releasably locked.

8. Back rest according to claim 6 or 7,
characterised in that the locking ring (32) is formed as a plastics injection moulded part and within its recess (34) has a collar (35) moulded to it in one piece - as counter notch for axially securing the rotary knob (36) -, and that on the free end of the rotary knob-sleeve part (39) there are moulded in one piece a plurality of cam-like notches (40), having starting slopes (41), which in the assembled position of the rotary knob (36) engage the collar (36) from behind.

9. Back rest according to one or more of the preceding claims,
characterised in that between rotary knob (36) and the back rest support part (15) there is arranged a sliding ring (43), interspersed by the sleeve part (39) of the rotary knob (36), on which is supported the grip element (37) of the rotary knob (36) with a shoulder (38).

10. Back rest according to claim 9,
characterised in that the sliding ring (43) is also formed as a plastics injection moulded part and that spigot part (24), rotary knob (36), locking ring (32) and sliding ring (43) are made from the same material, including all functional elements which have been moulded on in one piece.

11. Back rest according to one or more of the claims 6 to 10, characterised in that the edges (33 or 44) of the locking ring (32) on the one hand and the sliding ring (43) on the other hand are each folded plate-like in the direction towards the back rest support part (15).

12. Back rest according to one or more of the preceding claims,
characterised in that the spigot part (24) is of sleeve-like construction and can be non-detachably force-fitted to a metal holding bolt (26) secured to the side of the body, preferably by welding (Fig. 2).

13. Back rest according to claim 12,
characterised in that the metal holding bolt (26) is threaded - for axially fixing the force-fitted spigot part (24) - and is knurled at its free end - for non-rotatably fixing the force-fitted part (24).

14. Back rest according to one or more of the preceding claims,
characterised in that the rear end of the spigot part (24) intersperses a recess in the hat shelf (27, 29) and supports itself with a one-piece moulded collar (28) against the front side of the hat shelf.

**Revendications**

1. Dossier (13) pour sièges (10) de véhicules automobiles, en particulier pour les sièges arrières de véhicules automobiles, comportant un accoudoir central (19) rabattable vers l'avant et un élément porteur de dossier (15) disposé derrière l'accoudoir central et verrouillable sur la carrosserie qui - afin de créer une trappe de chargement dans la région de l'accoudoir central - peut être également rabattu vers l'avant après avoir libéré le verrouillage sur la carrosserie, caractérisé en ce qu'un têton (24) qui comporte latéralement de butées (48) et qui est monté de manière permanente sur la carrosserie (en 26, 27) derrière l'élément porteur de dossier (15), sert au verrouillage de l'élément porteur de dossier (15), et en ce que l'extrémité libre du têton (24) portant les butées (48) traverse, en position rabattue vers l'arrière de l'élément porteur de dossier (15), un évidement (31, 46) dans l'élément porteur de dossier (15), et en ce qu'un bouton tournant (36) peut être engagé sur le têton (24), à partir de la face avant de l'élément porteur de dossier (15), lequel bouton tournant présente une partie en manchon (39) munie d'un évidement central (47) sur la paroi intérieure duquel sont disposées des saillies radiales (49) qui coopèrent à la manière d'une fermeture à baïonnette avec les butées (48) du têton (24) lors de l'actionnement du bouton tournant (36).

2. Dossier selon la revendication 1, caractérisé en ce que deux butées (48) formant cames sont disposées latéralement sur le têton en des points diamétralement opposés et des saillies (49) formant également cames derrière lesquelles s'engagent, en position de verrouillage, les butées en forme de cames (48) du têton (24), sont disposées sur la paroi intérieure (47) du bouton tournant (36) - également en des points diamétralement opposés.

3. Dossier selon la revendication 1 ou 2, caractérisé en ce que les butées (48) en forme de cames du têton (24) sont effilées à la manière d'une flèche en direction du bouton tournant (36) et les saillies en forme de cames (49) du bouton tournant (36) sont effilées à la manière d'une flèche en direction du têton (24).

4. Dossier selon la revendication 1, 2 ou 3, caractérisé en ce que des butées (51) sont disposées sur l'extrémité de la paroi interne (47) du bouton tournant opposée aux saillies (49) afin de déterminer axialement la position de verrouillage du têton (24) et du bouton tournant (36).

5. Dossier selon une ou plusieurs des revendications précédentes, caractérisé en ce que le têton (24) et le bouton tournant (36) sont réalisés sous forme d'éléments en matière plastique moulés par injection et les butées (48) et les saillies (49) et éventuellement d'autres éléments du têton et du bouton tournant sont réalisés d'une pièce chaque fois.

6. Dossier selon une ou plusieurs des revendications précédentes, caractérisé en ce qu'une bague d'arêt (32) est disposée dans un évidement (31) de l'élément porteur de dossier (15, 30), laquelle bague prend appui par son bord (33) en forme de flasque sur la face arrière de l'élément porteur de dossier et est munie d'un évidement (34) concentrique à l'évidement (31, 46) de l'élément porteur de dossier (15), dans lequel pénètrent, à partir de la face avant, la partie en manchon (39) du bouton tournant (36) et - en position verrouillée - à partir de la face arrière, le têton (24) (figure 3).

7. Dossier selon la revendication 6, caractérisé en ce que la partie en manchon (39) du bouton tournant (36) avec la bague d'arrêt (32) est mobile en rotation, mais est montée par encliquetage dans la direction axiale de manière non démontable, sans possibilité de déplacement en translation.

8. Dossier selon la revendication 6 ou 7, caractérisé en ce que la bague d'arrêt (32) est réalisée sous la forme d'une pièce en matière plastique moulée par injection et présente à l'intérieur de son évidement (34) - comme butée pour le positionnement axial du bouton tournant (36) - un collet (35) venu d'une pièce, et en ce que plusieurs saillies (40) en forme de cames munies de rampes d'entrée (41) sont formées sur l'extrémité libre de la partie en manchon (39) du bouton tournant, lesquelles saillies s'accrochent en position de montage du bouton tournant (36) derrière le collet (35).

9. Dossier selon une ou plusieurs des revendication précédentes, caractérisé en ce qu'une rondelle de friction (43) qui est traversée par la partie en manchon (39) du bouton tournant (36) et sur laquelle la partie poignée (37) du bouton tournant (36) prend appui par un épaulement (38), est placée entre le bouton tournant (36) et l'élément porteur de dossier (15).

10. Dossier selon la revendication 9, caractérisé en ce que la rondelle de friction (43) est également réalisée sous la forme d'un élément en matière plastique moulé par injection et en ce que le têton (24), le bouton tournant (36), la bague d'arrêt (32) et la rondelle de friction (43), ainsi que tous les éléments fonctionnels moulés d'une pièce, sont réalisés en un même matériau.

11. Dossier selon une ou plusieurs des revendication 6 à 10, caractérisé en ce que les bords (33 ou 44) de la bague d'arrêt (32) d'une part et de la rondelle de friction (43) d'autre part sont recourbés en forme de cuvette en direction de l'élément porteur de dossier (15).

12. Dossier selon une ou plusieurs des revendication précédentes, caractérisé en ce que le têton (24) est réalisé sous la forme d'un manchon et est emmanché de manière non démontable sur un goujon-support (26) métallique fixé de préférence par soudure sur la carrosserie (figure 2).

13. Dossier selon la revendication 12, caractérisé en ce que le goujon-support (26) métallique présente un filetage - pour l'immobilisation dans la direction axiale du têton (24) monté dessus - et, à son extrémité libre, un moletage - pour l'immobilisation en rotation du têton (24) monté dessus -.

14. Dossier selon une ou plusieurs des revendication précédentes, caractérisé en ce que le têton (24) pénètre par son extrémité arrière dans un évidement de la plage arrière (27, 29) et prend appui sur la face avant de la plage arrière par l'intermédiaire d'une collerette en forme de flasque (28) venue d'une pièce.

Fig.2

28

48 24

26

27

−23−

17

13

16

32

45

33

47

34

37

36

39 43

14

18

22

21

15

19

20

12

10

11

Fig.1

# Fig.3